# FASCICULE DE BREVET EUROPEEN

(11) **EP 3 083 375 B1**
(45) Date de publication et mention de la délivrance du brevet: **11.04.2018**
(21) Numéro de dépôt: 14806297.9
(22) Date de dépôt: 04.12.2014
(51) Int. Cl.: B62D 25/14, B62D 29/00

(54) **ENSEMBLE COMPORTANT UNE TRAVERSE DE PLANCHE DE BORD POUR VÉHICULE AUTOMOBILE ET DEUX SUPPORTS LATÉRAUX PERMETTANT DE FIXER CETTE TRAVERSE À LA CAISSE DU VÉHICULE**
ANORDNUNG MIT EINEM ARMATURENBRETT-QUERTRÄGER FÜR EIN MOTORFAHRZEUG UND DOPPELSEITIGE TRÄGER ZUR SICHERUNG DES QUERTRÄGERS AN DER FAHRZEUGKAROSSERIE
ASSEMBLY COMPRISING A DASHBOARD CROSS-MEMBER FOR A MOTOR VEHICLE AND TWO SIDE SUPPORTS FOR SECURING THE CROSS-MEMBER TO THE BODY OF THE VEHICLE

(30) Priorité: 18.12.2013 FR 1362938
(43) Date de publication de la demande: 26.10.2016
(73) Titulaire: PSA Automobiles SA, 78300 Poissy (FR); Rehau SA, 57340 Morhange (FR)
(72) Inventeur: APPASAMY, Jean Michel, 78760 Jouars-Pontchartrain (FR); PENNERATH, Eddy, 57450 Henriville (FR)
(74) Mandataire: Fosse, Danièle
(86) Numéro de dépôt international: PCT/EP2014/076511
(87) Numéro de publication internationale: WO 2015/090989

(56) Documents cités:
- EP-A1- 2 597 017
- EP-A2- 1 415 897

## Description

La présente invention concerne un ensemble comportant une traverse de planche de bord pour véhicule automobile et deux supports latéraux permettant de fixer cette traverse à la caisse du véhicule.

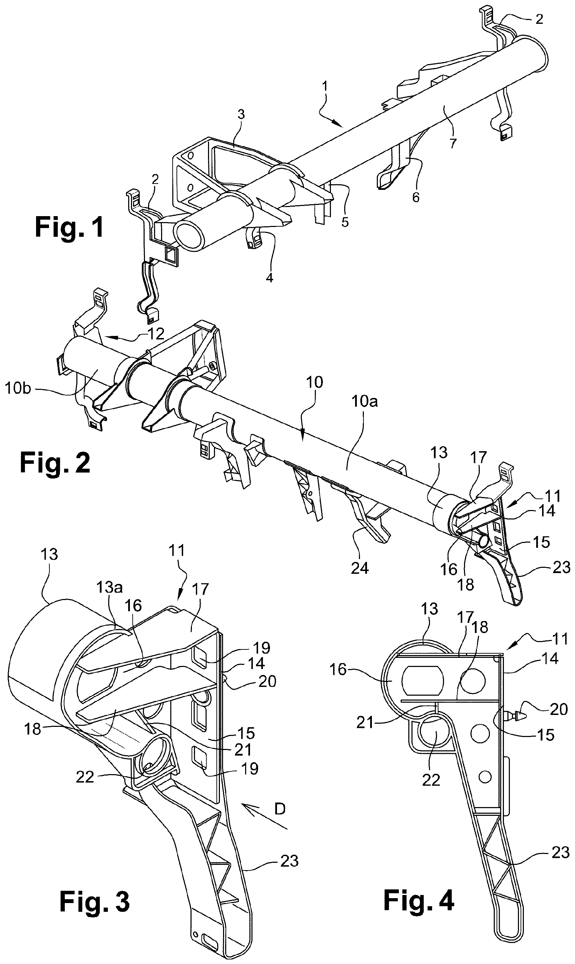

La figure 1 représente une traverse 1 de tableau de bord pour véhicule automobile équipée de diverses pattes de fixation, telles que les pattes 2, 3, 4, 5, 6 permettant de fixer la traverse 1 à la caisse du véhicule ou de fixer des accessoires à cette traverse.

Dans le but d'alléger cette traverse 1, celle-ci comprend dans la zone située à la droite de la figure 1, un tube 7 en matière plastique composite, telle que du polypropylène chargé de fibres.

Lorsque la traverse 1 est en position dans un véhicule, le tube 7 en matière composite s'étend devant le passager avant.

La partie de la traverse 1 qui est située devant le conducteur est un tube en acier qui est relié au tube 7 en matière composite.

La traverse 1 comporte en outre à chacune de ses deux extrémités opposées, un support latéral 2 permettant de fixer la traverse 1 à la caisse du véhicule.

Ces deux supports 2 sont actuellement en tôle d'acier de sorte qu'ils augmentent la masse totale de la planche de bord du véhicule.

Une traverse de ce type est décrite dans EP 2 597 017.

Le but de la présente invention est de remédier à cet inconvénient, en créant une traverse équipée de supports latéraux à la fois légers, rigides et faciles à monter.

Ce but est atteint, selon l'invention, grâce à un ensemble comportant une traverse de planche de bord pour véhicule automobile et deux supports latéraux destinés respectivement à être fixés d'une part aux deux extrémités opposées de la traverse et d'autre part à la caisse du véhicule, cette traverse comportant un tube dont une partie au moins est en matière plastique composite, au moins l'un des deux supports latéraux étant en matière plastique composite, ledit support comportant une partie en forme de bague pouvant s'engager sur l'extrémité dudit tube en matière plastique composite et une partie destinée à être fixée sur la caisse du véhicule, caractérisé en ce que ladite matière plastique composite est renforcée par une ou plusieurs plaques en métal liée(s) à cette matière plastique par surmoulage ou collage.

La bague du support latéral facilite le montage de ce support sur le tube en matière plastique composite.

En effet, il suffit d'engager cette bague sur l'extrémité du tube.

La fixation de cette bague au tube peut être réalisée simplement par soudage laser ou autre moyen permettant d'obtenir une fusion superficielle de la matière plastique.

Le renfort par une ou plusieurs plaques métalliques de la partie du support destinée à être fixée à la caisse permet d'obtenir un support suffisamment rigide pour résister aux efforts, sans pour autant augmenter excessivement la masse du support.

Dans une version préférée de l'invention, la plaque en métal ou lesdites plaques en métal comprennent au moins une plaque composée de plusieurs parties pliées les unes par rapport aux autres.

Ces plis permettent à la plaque de s'adapter à la géométrie du support.

De préférence également, ladite plaque comprend au moins deux parties perpendiculaires l'une par rapport à l'autre, l'une comportant des trous de passage pour des vis de fixation du support à la caisse du véhicule et l'autre recouvrant partiellement l'ouverture circulaire de la bague qui est opposée à celle destinée à être engagée sur l'extrémité dudit tube.

Ainsi, l'une des parties de la plaque permet de renforcer la partie du support destinée à être fixée à la caisse et l'autre partie de la plaque permet d'obturer partiellement l'ouverture de la bague pour caler axialement le tube en matière composite.

La ou lesdites parties de la plaque en métal peuvent être ajourées pour diminuer leur masse.

Dans un mode de réalisation particulièrement avantageux de l'invention, le support comprend en outre deux plaques s'étendant perpendiculairement auxdites deux parties de plaque perpendiculaires et étant reliées à ces dernières.

Ces deux plaques augmentent notablement la rigidité de l'ensemble des plaques de renfort du support.

Selon une autre particularité avantageuse de l'invention, la partie de ladite plaque pliée qui est destinée à être fixée à la caisse du véhicule porte un pion d'indexage qui fait saillie vers l'extérieur sur la face de cette partie de plaque qui est surmoulée par ladite matière plastique du support.

Ce pion permet de rendre reproductible la position de la traverse par rapport à la caisse.

Selon d'autres particularités avantageuses de l'invention :
- ladite bague est reliée audit tube par des liaisons frangibles en cas de choc latéral exercé sur le véhicule ;
- ledit support latéral comprend un évidement de manutention dudit support par un robot, cet évidement étant moulé dans ladite matière plastique composite ;
- ledit support latéral est réalisé d'une seule pièce avec l'une des pattes de fixation d'un vide-poche ;
- ladite patte de fixation est moulée avec la matière plastique composite constituant ledit support latéral.

L'invention concerne également un support latéral pour une traverse de planche de bord pour véhicule automobile destiné à être fixé d'une part à une extrémité de la traverse et d'autre part à la caisse du véhicule, caractérisé en ce qu'il est en matière plastique composite, ledit support comportant une partie en forme de bague pouvant s'engager sur l'extrémité de la traverse et une partie destinée à être fixée sur la caisse du véhicule, ladite matière plastique composite étant renforcée par une ou plusieurs plaques en métal liée(s) à cette matière plastique par surmoulage ou collage.

D'autres particularités et avantages de l'invention apparaîtront encore tout au long de la description ci-après.

Aux dessins annexés, donnés à titre d'exemples, non limitatifs :
- la figure 2 est une vue en perspective d'un ensemble traverse de planche de bord et supports latéraux selon l'invention,
- la figure 3 est une vue à échelle agrandie de l'un des supports latéraux avant fixation sur le tube de la traverse, représentée sur la figure 2,
- la figure 4 est une vue en plan du support latéral suivant la flèche D de la figure 3,
- la figure 5 est une vue de l'une des faces latérales du support, représenté sur les figures 3 à 4,
- la figure 6 est une vue de la face latérale opposée du support, montré sur la figure 5,
- la figure 7 est une autre vue en perspective du support,
- la figure 8 est une autre vue en plan du support.

La figure 2 représente un ensemble selon l'invention comportant une traverse 10 de planche de bord pour véhicule automobile et deux supports latéraux 11, 12 destinés respectivement à être fixés d'une part aux deux extrémités opposées de la traverse 10 et d'autre part à la caisse du véhicule.

La traverse 10 comporte un tube 10a dont la partie de droite est destinée à être disposée devant la place du passager avant.

Cette partie du tube 10a est en matière plastique composite, telle que du polypropylène chargé de fibres.

La partie de gauche de la traverse 10 est constituée par un tube en acier 10b, car cette partie doit supporter la colonne de direction du véhicule.

Conformément à l'invention, au moins l'un des deux supports latéraux, à savoir le support latéral 11, est en matière plastique composite.

Ce support 11 comporte une partie 13 en forme de bague pouvant s'engager sur l'extrémité du tube 10a en matière plastique composite.

Le support 11 comporte en outre une partie 14 destinée à être fixée sur la caisse du véhicule.

La matière plastique composite du support 11 est renforcée par une ou plusieurs plaques 15, 16, 17, 18 en métal liée(s) à la matière plastique par surmoulage ou collage.

La plaque en métal ou les plaques en métal comprennent au moins une plaque composée de plusieurs parties telles que 15, 16 pliées les unes par rapport aux autres.

Cette plaque comprend au moins deux parties 15, 16 perpendiculaires l'une par rapport à l'autre, l'une 15 comportant des trous de passage 19 pour des vis de fixation du support 11 à la caisse du véhicule et l'autre partie 16 recouvre l'ouverture circulaire 13a de la bague 13 qui est opposée à celle destinée à être engagée sur l'extrémité du tube 10a.

Cette partie 16 de la plaque est ajourée, comme on le voit sur les figures 3 et 4, pour réduire la masse.

La figure 3 montre en outre que le support 11 comprend deux plaques 17, 18 s'étendant perpendiculairement aux deux parties perpendiculaires 15, 16 et étant reliées à ces dernières.

La plaque composée des parties 15, 16 et des plaques 17, 18 forment ensemble une structure tridimensionnelle liée par surmoulage avec la matière composite du support 11, ce qui confère à celui-ci une excellente rigidité, tout en ayant une masse relativement faible.

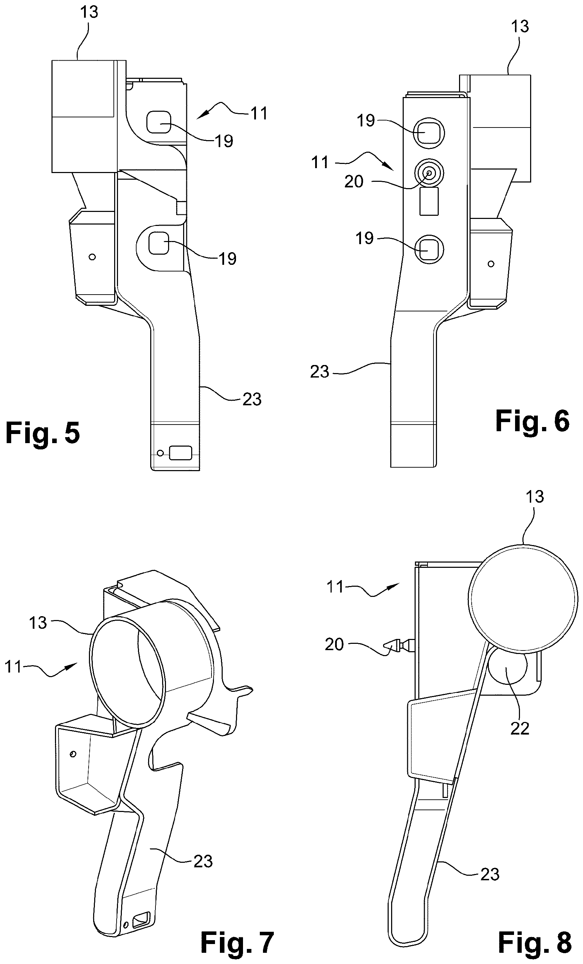

Par ailleurs, les figures 3 et 4 montrent que la partie 15 de la plaque pliée qui est destinée à être fixée à la caisse du véhicule porte un pion d'indexage 20 qui fait saillie vers l'extérieur sur la face de cette plaque, qui est surmoulée par la matière plastique du support 11 comme indiqué notamment sur la figure 6.

Par ailleurs, la bague 13 est reliée au tube 10a par des liaisons, telles que la nervure 21 visible sur les figures 3 et 4, frangibles ou fusibles en cas de choc latéral exercé sur le véhicule.

Les figures 3, 4 et 8 montrent en outre que le support latéral 11 comprend un évidement cylindrique 22 de manutention du support 11 par un robot.

Cet évidement 22 est moulé dans la matière plastique composite du support 11.

Dans l'exemple représenté sur les figures 3 à 8, le support latéral 11 est réalisé d'une seule pièce en matière composite avec l'une 23 des pattes de fixation d'un vide-poche.

La seconde patte 24 de fixation du vide-poche est visible sur la figure 2.

Les principaux avantages de l'ensemble traverse 10 et support latéral 11 que l'on vient de décrire sont les suivants :
- l'ensemble selon l'invention est à la fois léger et rigide, grâce à la matière composite qui le compose ;
- le support latéral grâce à ses plaques métalliques qui sont au moins partiellement enrobées dans la matière composite permettent d'obtenir une liaison rigide entre le tube de la traverse et la caisse du véhicule ;
- étant donné que ces plaques sont ajourées, elles ont une incidence faible sur la masse de l'ensemble ;
- malgré la grande rigidité de la structure du support, cette structure est déformable en cas de choc latéral, grâce aux liaisons frangibles ou fusibles existant dans cette structure ;
- la structure du support latéral permet ainsi d'absorber l'énergie de ce choc latéral.

De façon plus précise, les plaques 17 et 18 jouent le rôle de nervures et donnent de la rigidité au support notamment en choc latéral.

Mais ces nervures sont calibrées en rigidité de façon à ce qu'elles se déforment en absorbant de l'énergie.

L'effort dirigé suivant l'axe transversal Y du véhicule est dans ce cas calibré à environ 700 ou 1000 daN.

La résistance des nervures 17 et 18 ne doit pas être trop importante.

On préfère une carrosserie qui se déforme de façon maîtrisée en absorbant de l'énergie à une carrosserie complètement rigide.

On réalise ainsi une zone fusible située dans ces nervures.

Cela permet d'éviter des ruptures dans les autres éléments qui transmettent l'effort du choc latéral.

Le tube composite peut ainsi avoir une résistance légèrement supérieure à celle du support latéral.

Si ces zones fusibles n'existaient pas, le tube composite devrait avoir une résistance supérieure et serait donc plus lourd et plus cher.

Lors du choc latéral, le support hybride pivote autour d'un axe vertical, la partie 15 étant appuyée contre la caisse.

Ainsi, lorsque la cloison 16 tourne autour de cet axe vertical, le tube composite est sollicité surtout dans sa zone avant.

Pour éviter ces contraintes trop localisées qui pourraient entraîner une rupture du tube, on fait une découpe en biais sur l'extrémité du tube composite.

Ainsi cette zone ne subit pas de contraintes, mais la pression due au choc latéral est répartie sur le reste de la surface du tube.

Ce même effet peut être obtenu en réalisant à l'intérieur de la bague 13 un appui correspondant aux trois quarts de la surface du tube.

Seule la zone avant du tube ne sera donc pas en butée.

## Revendications

1. Support latéral pour une traverse (10) de planche de bord pour véhicule automobile destiné à être fixé d'une part à une extrémité de la traverse (10) et d'autre part à la caisse du véhicule, ledit support (11) en matière plastique composite comportant une partie en forme de bague (13) pouvant s'engager sur l'extrémité de la traverse et une partie (14) destinée à être fixée sur la caisse du véhicule, **caractérisé en ce que** ladite matière plastique composite est renforcée par une ou plusieurs plaques (15, 16, 17, 18) en métal liée(s) à cette matière plastique par surmoulage ou collage.

2. Ensemble comportant une traverse (10) de planche de bord pour véhicule automobile et deux supports latéraux (11, 12) destinés respectivement à être fixés d'une part aux deux extrémités opposées de la traverse (10) et d'autre part à la caisse du véhicule, cette traverse (10) comportant un tube (10a) dont une partie au moins est en matière plastique composite, au moins l'un (11) des deux supports latéraux étant en matière plastique composite, ledit support (11) comportant une partie en forme de bague (13) pouvant s'engager sur l'extrémité dudit tube (10a) en matière plastique composite et une partie (14) destinée à être fixée sur la caisse du véhicule, **caractérisé en ce que** ladite matière plastique composite est renforcée par une ou plusieurs plaques (15, 16, 17, 18) en métal liée(s) à cette matière plastique par surmoulage ou collage.

3. Ensemble selon la revendication 2, **caractérisé en ce que** la plaque en métal ou lesdites plaques en métal comprennent au moins une plaque composée de plusieurs parties (15, 16) pliées les unes par rapport aux autres.

4. Ensemble selon la revendication 3, **caractérisé en ce que** ladite plaque comprend au moins deux parties (15, 16) perpendiculaires l'une par rapport à l'autre, l'une (15) comportant des trous de passage (19) pour des vis de fixation du support (11) à la caisse du véhicule et l'autre recouvrant partiellement l'ouverture circulaire de la bague (13) qui est opposée à celle destinée à être engagée sur l'extrémité dudit tube (10a).

5. Ensemble selon la revendication 4, **caractérisé en ce que** la ou lesdites parties (15, 16) sont ajourées.

6. Ensemble selon l'une des revendications 4 ou 5, **caractérisé en ce que** le support (11) comprend en outre deux plaques (17, 18) s'étendant perpendiculairement auxdites deux parties de plaque perpendiculaires (15, 16) et étant reliées à ces dernières.

7. Ensemble selon l'une des revendications 4 à 6, **caractérisé en ce que** la partie (15) de ladite plaque pliée qui est destinée à être fixée à la caisse du véhicule porte un pion d'indexage (20) qui fait saillie vers l'extérieur sur la face de cette partie de plaque (15) qui est surmoulée par ladite matière plastique du support (11).

8. Ensemble selon l'une des revendications 1 à 7, **caractérisé en ce que** ladite bague (13) est reliée audit tube (10a) par des liaisons frangibles en cas de choc latéral exercé sur le véhicule.

9. Ensemble selon l'une des revendications 1 à 8, **caractérisé en ce que** ledit support latéral (11) comprend un évidement (22) de manutention dudit support (11) par un robot, cet évidement (22) étant moulé dans ladite matière plastique composite.

10. Ensemble selon l'une des revendications 1 à 9, **caractérisé en ce que** ledit support latéral (11) est réalisé d'une seule pièce avec l'une des pattes de fixation (23) d'un vide-poche.

## Patentansprüche

1. Seitenträger für einen Armaturenbrett-Querträger (10) für ein Kraftfahrzeug, der dazu bestimmt ist, einerseits an einem Ende des Querträgers (10) und andererseits am Karosseriegehäuse des Fahrzeugs befestigt zu sein, wobei der Träger (11) aus Verbundkunststoff einen Teil in Ringform (13) umfasst, der mit Ende des Querträgers in Eingriff gelangen kann, und einen Teil (14), der dazu bestimmt ist, auf dem Karosseriegehäuse des Fahrzeugs befestigt zu sein, **dadurch gekennzeichnet, dass** der Verbundkunststoff durch eine oder mehrere Platten (15, 16, 17, 18) aus Metall verstärkt ist, die mit diesem Kunststoff durch Überformen oder Kleben verbunden sind.

2. Anordnung, umfassend einen Armaturenbrett-Querträger (10) für ein Kraftfahrzeug und zwei Seitenträger (11, 12), die dazu bestimmt sind, einerseits an den zwei gegenüberliegenden Enden des Querträgers (10) bzw. andererseits am Karosseriegehäuse des Fahrzeugs befestigt zu sein, wobei dieser Querträger (10) ein Rohr (10a) umfasst, bei dem mindestens ein Teil aus Verbundkunststoff ist, wobei mindestens einer (11) der zwei Seitenträger aus Verbundkunststoff ist, wobei der Träger (11), der einen ringförmigen Teil (13) umfasst, mit dem Ende des Rohrs (10a) aus Verbundkunststoff in Eingriff zu gelangen, und wobei ein Teil (14) dazu bestimmt ist, an dem Karosseriegehäuse des Fahrzeugs befestigt zu sein, **dadurch gekennzeichnet, dass** der Verbundkunststoff durch eine oder mehrere Platten (15, 16, 17, 18) aus Metall verstärkt ist, die mit diesem Kunststoff durch Überformen oder Kleben verbunden sind.

3. Anordnung nach Anspruch 2, **dadurch gekennzeichnet, dass** die Metallplatte oder die Metallplatten mindestens eine Platte umfassen, die aus mehreren Teilen (15, 16) besteht, die in Bezug zueinander gefalzt sind.

4. Anordnung nach Anspruch 3, **dadurch gekennzeichnet, dass** die Platte mindestens zwei Teile (15, 16) umfasst, die zueinander senkrecht sind, wobei der eine (15) Durchgangslöcher (19) für Schrauben zur Befestigung des Trägers (11) am Karosseriegehäuse des Fahrzeugs umfasst, und der andere teilweise die kreisförmige Öffnung des Ringes (13), die jener gegenüberliegt, die dazu bestimmt ist, mit dem Ende des Rohrs (10a) in Eingriff zu gelangen, bedeckt.

5. Anordnung nach Anspruch 4, **dadurch gekennzeichnet, dass** der oder die Teile (15, 16) gelocht sind.

6. Anordnung nach einem der Ansprüche 4 oder 5, **dadurch gekennzeichnet, dass** der Träger (11) ferner zwei Platten (17, 18) umfasst, die sich senkrecht auf die zwei senkrechten Plattenteile (15, 16) erstrecken und mit diesen letztgenannten verbunden sind.

7. Anordnung nach einem der Ansprüche 4 bis 6, **dadurch gekennzeichnet, dass** der Teil (15) der gefalzten Platte, der dazu bestimmt ist, an dem Karosseriegehäuse des Fahrzeugs befestigt zu sein, einen Indexierungsstift (20) trägt, der nach außen auf der Seite dieses Plattenteils (15), die mit dem Kunststoff des Trägers (11) überformt ist, herausragt.

8. Anordnung nach einem der Ansprüche 1 bis 7, **dadurch gekennzeichnet, dass** der Ring (13) mit dem Rohr (10a) durch zerbrechbare Verbindungen im Falle eines auf das Fahrzeug ausgeübten seitlichen Stoßes verbunden ist.

9. Anordnung nach einem der Ansprüche 1 bis 8, **dadurch gekennzeichnet, dass** der Seitenträger (11) eine Ausnehmung (22) zur Handhabung des Trägers (11) durch einen Roboter umfasst, wobei diese Ausnehmung (22) in den Verbundkunststoff eingeformt ist.

10. Anordnung nach einem der Ansprüche 1 bis 9, **dadurch gekennzeichnet, dass** der Seitenträger (11) aus einem Stück mit einer der Befestigungslaschen (23) eines Ablagefachs hergestellt ist.

## Claims

1. A side support for a dashboard cross-member (10) for a motor vehicle, intended to be secured on the one hand to an end of the cross-member (10) and on the other hand to the body of the vehicle, said support (11) made of composite plastic material comprising a ring-shaped portion (13) able to engage on the end of the cross-member and a portion (14) intended to be secured to the body of the vehicle, **characterized in that** said composite plastic material is reinforced by one or more metal plates (15, 16, 17, 18) linked to this plastic material by overmoulding or bonding.

2. An assembly comprising a dashboard cross-member (10) for a motor vehicle and two side supports (11, 12) intended respectively to be secured on the one hand to the two opposite ends of the cross-member (10) and on the other hand to the body of the vehicle, this cross-member (10) comprising a tube (10a), a portion of which at least is made of composite plastic material, at least one (11) of the two side supports being made of composite plastic material, said support (11) comprising a ring-shaped portion (13) able to engage on the end of said tube (10a) made of composite plastic material, and a portion (14) intended to be secured to the body of the vehicle, **characterized in that** said composite plastic material is reinforced by one or more metal plates (15, 16, 17, 18) linked to this plastic material by overmoulding or bonding.

3. The assembly according to Claim 2, **characterized in that** the metal plate or said metal plates include at least one plate composed of several portions (15, 16) bent with respect to one another.

4. The assembly according to Claim 3, **characterized in that** said plate includes at least two portions (15, 16) perpendicular with respect to one another, one (15) comprising passage holes (19) for attachment screws of the support (11) to the body of the vehicle, and the other partially covering the circular opening of the ring (13) which is opposite to that intended to be engaged on the end of said tube (10a).

5. The assembly according to Claim 4, **characterized in that** said portion or portions (15, 16) are perforated.

6. The assembly according to one of Claims 4 or 5, **characterized in that** the support (11) includes in addition two plates (17, 18) extending perpendicularly to said two perpendicular plate portions (15, 16), and being connected to these latter.

7. The assembly according to one of Claims 4 to 6, **characterized in that** the portion (15) of said bent plate which is intended to be secured to the body of the vehicle carries an indexing pin (20) which projects towards the exterior on the face of this plate portion (15) which is overmoulded by said plastic material of the support (11).

8. The assembly according to one of Claims 1 to 7, **characterized in that** said ring (13) is connected to said tube (10a) by links which are breakable in the event of lateral impact exerted on the vehicle.

9. The assembly according to one of Claims 1 to 8, **characterized in that** said side support (11) includes a recess (22) for the handling of said support (11) by a robot, this recess (22) being moulded in said composite plastic material.

10. The assembly according to one of Claims 1 to 9, **characterized in that** said side support (11) is made in a single piece with one of the attachment lugs (23) of a glove compartment.
